# EUROPÄISCHE PATENTSCHRIFT

(11) **EP 4 045 817 B1**
(45) Veröffentlichungstag und Bekanntmachung des Hinweises auf die Patenterteilung: **07.05.2025**
(21) Anmeldenummer: 20792340.0
(22) Anmeldetag: 12.10.2020
(51) Int. Cl.: F16G 13/16

(54) **LEITUNGSFÜHRUNGSEINRICHTUNG SOWIE SEITENLASCHE UND GLIED DAFÜR**
LINE-ROUTING DEVICE AND SIDE BRACKET AND LINK THEREFOR
DISPOSITIF DE ROUTAGE DE LIGNE AINSI QUE SUPPORT LATÉRAL ET LIAISON ASSOCIÉS

(30) Priorität: 16.10.2019 DE 202019105730 U
(43) Veröffentlichungstag der Anmeldung: 24.08.2022
(73) Patentinhaber: Tsubaki Kabelschlepp GmbH, 57482 Wenden-Gerlingen (DE)
(72) Erfinder: KEMPER, Uwe, 57223 Kreuztal (DE)
(74) Vertreter: Neumann, Ditmar
(86) Internationale Anmeldenummer: PCT/EP2020/078570
(87) Internationale Veröffentlichungsnummer: WO 2021/074062

(56) Entgegenhaltungen:
- EP-A1- 2 549 144
- DE-A1- 102004 038 817
- DE-A1- 102009 033 679
- DE-A1- 102010 035 352
- DE-A1- 19 851 340

## Beschreibung

Die vorliegende Erfindung betrifft eine Seitenlasche für ein Glied für eine Leitungsführungseinrichtung, ein Glied für eine Leitungsführungseinrichtung und eine Leitungsführungseinrichtung.

Aus dem Stand der Technik sind Leitungsführungseinrichtungen bekannt, mit denen Kabel und/oder Schläuche zwischen relativ zueinander beweglichen Körpern geführt werden können.

Leitungsführungseinrichtungen bilden regelmäßig eine Schlaufe aus einem Obertrum, einem Umlenkbereich und einem Untertrum. Obertrum und Untertrum gehen über den Umlenkbereich ineinander über. Es gibt sogenannte freitragende Leitungsführungseinrichtungen, bei denen das Obertrum und das Untertrum einander nicht berühren. Daneben gibt es auch Leitungsführungseinrichtungen, bei denen das Obertrum auf dem Untertrum aufliegt. Beim Verfahren der Leitungsführungseinrichtung gleitet das Obertrum in dem Fall über das Untertrum. Dieses Gleiten wird durch Reibung erschwert. Zudem kommt es aufgrund des Gleitens oft zu Verschleiß an der Leitungsführungskette. Daher sind Leitungsführungseinrichtungen bekannt, bei denen das Gleiten durch Rollen erleichtert werden soll. Eine solche Leitungsführungseinrichtung ist beispielsweise aus der EP 2 549 144 A1 bekannt. Dabei können aber die Rollen des Obertrums und des Untertrums aufeinanderstoßen. Dies kann zu Stößen führen, die die Leitungsführungseinrichtungen in eine ungewünschte Schwingung versetzen.

Hiervon ausgehend liegt der vorliegenden Erfindung die Aufgabe zugrunde, die aus dem Stand der Technik bekannten Probleme zumindest teilweise zu überwinden und insbesondere eine Leitungsführungseinrichtung bereitzustellen, bei der Obertrum und Untertrum besonders reibungsarm und schwingungsarm gegeneinander verfahrbar sind. Weiterhin sollen ein Glied für eine solche Leitungsführungseinrichtung und eine Seitenlasche für ein solches Glied bereitgestellt werden.

Diese Aufgaben werden gelöst mit den Merkmalen der unabhängigen Ansprüche. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Erfindungsgemäß wird eine Seitenlasche für ein Glied für eine Leitungsführungseinrichtung gemäß Anspruch 1 vorgestellt.

Die Seitenlasche ist dazu geeignet, Teil eines Gliedes einer Leitungsführungseinrichtung zu sein. Das Glied ist dazu geeignet, Teil einer Leitungsführungseinrichtung zu sein. Eine Leitungsführungseinrichtung dient dazu, Leitungen wie Kabel und/oder Schläuche zwischen relativ zueinander beweglichen Körpern zu führen. Dabei werden die Leitungen durch die Leitungsführungseinrichtung geschützt, insbesondere vor einer zu starken Biegung. Die Leitungsführungseinrichtung ist vorzugsweise aus einer Vielzahl von Gliedern ausgebildet. Zumindest einige dieser Glieder weisen vorzugsweise mindestens eine wie beschrieben ausgebildete Seitenlasche auf. Die beschriebene Seitenlasche insbesondere für eine Leitungsführungseinrichtung geeignet, die eine Schlaufe aus einem Obertrum, einem Umlenkbereich und einem Untertrum aufweist, wobei das Obertrum (bis auf einen durch die Rollen gebildeten Spalt) am Untertrum anliegen kann. Der Umlenkbereich ist dabei so definiert, dass dieser den Teil der Leitungsführungseinrichtung umfasst, der nicht an einem anderen Teil der Leitungsführungseinrichtung anliegt. Bei dieser Definition liegen also das gesamte Obertrum und das gesamte Untertrum aneinander an. Beim Verfahren der Leitungsführungseinrichtung können Obertrum und Untertrum aneinander vorbei bewegt werden. Diese Bewegung wird durch Rollen erleichtert, so dass die Bewegung als eine Abroll-Bewegung bezeichnet werden kann. Gegenüber einem reinen Gleiten hat eine Abrollbewegung den Vorteil einer geringeren Reibung und eines geringeren Verschleißes.

Die Rollen sind in den Seitenlaschen der Glieder vorgesehen. Die Seitenlaschen der Glieder einer Leitungsführungseinrichtung sind vorzugsweise so angeordnet, dass die Seitenlaschen einen oder mehrere Seitenlaschenstränge bilden. Ein Seitenlaschenstrang ist eine Aneinanderreihung von Seitenlaschen entlang einer Ausbreitungsrichtung der Leitungsführungseinrichtung. Vorzugsweise weisen alle Glieder die gleiche Anzahl von Seitenlaschen auf. Weist jedes Glied genau eine Seitenlasche auf, so bilden die Seitenlaschen der Glieder genau einen Seitenlaschenstrang. Weist jedes Glied jeweils zwei Seitenlaschen auf, sind zwei Seitenlaschenstränge gebildet: eine jeweilige erste Seitenlasche der Glieder ist Teil eines ersten Seitenlaschenstrangs, eine jeweilige zweite Seitenlasche der Glieder ist Teil eines zweiten Seitenlaschenstrangs. Weist jedes Glied jeweils mehr als zwei Seitenlaschen auf, werden auf entsprechende Weise mehr als zwei Seitenlaschenstränge gebildet.

Die beschriebene Seitenlasche weist eine Lauffläche und eine Rolle auf. Weist ein Glied genau eine Seitenlasche auf, so weist diese eine Lauffläche und eine Rolle auf. Das Glied hat also eine Lauffläche und eine Rolle. Weist das Glied zwei Seitenlaschen auf, so weist jede dieser Seitenlaschen vorzugsweise eine jeweilige Lauffläche und eine jeweilige Rolle auf. Das Glied hat also zwei Laufflächen und zwei Rollen. Es ist auch möglich, dass das Glied eine Seitenlasche mit Lauffläche und Rolle und eine Seitenlasche ohne Lauffläche und/oder ohne Rolle aufweist. In dem Fall hat das Glied zwar zwei Seitenlaschen, aber nur eine Lauffläche und/oder nur eine Rolle. Für Glieder mit mehr als zwei Seitenlaschen gilt Entsprechendes.

Die Rollen der Glieder der Leitungsführungseinrichtung können auf der Lauffläche rollen: Rollen der Glieder des Obertrums können auf Laufflächen der Glieder des Untertrums rollen und Rollen der Glieder des Untertrums können auf Laufflächen der Glieder des Obertrums rollen. Die Rollen und die Lauffläche der Glieder des Umlenkbereichs bleiben ungenutzt. Zu beachten ist aber, dass die Zugehörigkeit eines Gliedes zum Obertrum, zum Umlenkbereich oder zum Untertrum je nach Stellung der Leitungsführungseinrichtung unterschiedlich ist. So kann ein Glied in einer ersten Stellung der Leitungsführungseinrichtung Teil des Umlenkbereichs sein, so dass eine Rolle und eine Lauffläche dieses Gliedes ungenutzt sind. In einer zweiten Stellung der Leitungsführungseinrichtung kann das betrachtete Glied aber beispielsweise Teil des Untertrum sein, so dass die Rolle des betrachteten Gliedes auf der Lauffläche von Gliedern des Obertrums rollen kann und dass Rollen von Gliedern des Obertrums auf der Lauffläche des betrachteten Gliedes rollen können.

Die Lauffläche der beschriebenen Seitenlasche ist am Längsrand der Seitenlasche gebildet. Der Längsrand der Seitenlasche ist eine Randfläche, die parallel zur Längsrichtung der Seitenlasche ausgebildet ist. Die Seitenlasche ist vorzugsweise derart ausgebildet, dass die Längsrichtung der Seitenlasche bei bestimmungsgemäßer Verwendung der Seitenlasche entlang der Ausbreitungsrichtung der Leitungsführungsrichtung verläuft. Die Seitenlaschen eines Seitenlaschenstrangs werden vorzugsweise in Längsrichtung der Seitenlaschen zusammengesetzt. Das bedeutet, dass an zwei in Längsrichtung gegenüberliegenden Seiten einer Seitenlasche jeweils eine Seitenlasche eines benachbarten Gliedes angebunden ist.

Durch die Laufflächen der Seitenlaschen, die gemeinsam einen Seitenlaschenstrang bilden, wird eine Lauffläche dieses Seitenlaschenstrangs gebildet. Die Lauffläche des Seitenlaschenstrangs kann als eine einzige Lauffläche aufgefasst werden oder - gleichermaßen - als aus den Laufflächen der einzelnen Seitenlaschen zusammengesetzt. Die Beschreibung, dass die Rollen der Glieder des Untertrums auf Laufflächen von Gliedern des Obertrums rollen ist also äquivalent zu der Beschreibung, dass die Rollen der Glieder des Untertrum auf der Lauffläche des entsprechenden Seitenlaschenstrangs im Bereich des Obertrums rollen.

Die Lauffläche eines Seitenlaschenstrangs erstreckt sich über die gesamte Länge der Leitungsführungseinrichtung. Auf der gesamten Lauffläche können Rollen rollen. Gleichwohl kann nicht jede Rolle die gesamte Lauffläche nutzen. Die Rollen der Glieder des Untertrums können nur die Lauffläche der Glieder des Obertrums nutzen; die Rollen der Glieder des Obertrums können nur die Lauffläche der Glieder des Untertrum nutzen; die Rollen der Glieder des Umlenkbereichs können die Lauffläche gar nicht nutzen. Auch wenn die Zuordnung der Glieder zum Obertrum, Umlenkbereich und Untertrum veränderlich ist, so ist zwischen Untertrum und Obertrum in jedem Fall ein Umlenkbereich mit einer Mindestausdehnung vorhanden. Entsprechend kann eine Rolle also in keinem Fall die Lauffläche des eigenen Gliedes oder eines oder gegebenenfalls sogar mehrerer der benachbarten Glieder nutzen.

Weist die Leitungsführungseinrichtung genau einen Seitenlaschenstrang auf, gibt es genau eine Lauffläche, auf der die Rollen rollen können. Weist die Leitungsführungseinrichtung mehrere Seitenlaschenstränge auf, können die Rollen in Seitenlaschen eines ersten Seitenlaschenstrangs auf der Lauffläche des ersten Seitenlaschenstrangs rollen und die Rollen in Seitenlaschen eines zweiten Seitenlaschenstrangs auf der Lauffläche des zweiten Seitenlaschenstrangs. Weist die Leitungsführungseinrichtung mehr als zwei Seitenlaschenstränge auf, gilt Entsprechendes.

Die Rolle der beschriebenen Seitenlasche ist derart an der Achse gelagert, dass die Rolle quer zur Lauffläche der Seitenlasche beweglich ist. Dem entspricht, dass der Abstand zwischen der Achse und der Lauffläche verändert wird. Der Abstand zwischen der Achse und der Lauffläche ist die kürzeste Distanz zwischen der Achse und der Lauffläche. Da die Achse und die Lauffläche zueinander parallel sind, ist der Abstand an verschiedenen Stellen der Achse beziehungsweise der Lauffläche gleich. Der Abstand ist also senkrecht zur Lauffläche und zur Achse definiert.

Die Rolle ist vorzugsweise fest an der Achse gelagert. Eine Bewegung der Achse geht folglich mit einer Bewegung der Rolle einher. Die Rolle ist vorzugsweise starr ausgebildet. Eine Roll-Oberfläche der Rolle wird folglich parallel zur Achse bewegt. Alternativ ist es bevorzugt, dass die Rolle zumindest teilweise flexibel ausgebildet ist. Dadurch können Stöße noch stärker gedämpft werden.

Die Achse ist parallel zur Lauffläche und senkrecht zur Längsrichtung der Seitenlasche angeordnet. Eine Roll-Richtung der Rolle ist also parallel zur Längsrichtung der Seitenlasche. Die Anordnung der Achse relativ zur Lauffläche und zur Längsrichtung bezieht sich auf einen Normalzustand, in dem die Rolle nicht durch externe Kräfte belastet ist. Die Achse der Rolle kann innerhalb der Seitenlasche derart gehalten sein, dass die Rolle durch externe Krafteinwirkung verkippt werden kann. So kann die Achse der Rolle beispielsweise über Dämpfer in der Seitenlasche gehalten sein. Dadurch kann die Achse relativ zur Lauffläche und/oder zur Längsrichtung verkippt werden. Davon bleibt die beschriebene Definition der Anordnung der Achse relativ zur Lauffläche und zur Längsrichtung aber unberührt, weil sich diese Definition auf den Normalzustand bezieht.

Die Rolle ragt zumindest in der ersten Position aus der Lauffläche heraus. Die Rolle ist also derart in der Seitenlasche angeordnet, dass sich in der ersten Position ein Teil der Rolle derart außerhalb der Seitenlasche befindet, dass dieser Teil über die Lauffläche der Seitenlasche hervorsteht.

Treffen beim Verfahren der Leitungsführungseinrichtung eine Rolle aus dem Obertrum und eine Rolle aus dem Untertrum aufeinander, kann durch die gedämpfte Veränderlichkeit des Abstandes der Rollen zur Lauffläche ein Stoß verhindert oder zumindest gedämpft werden. Das liegt daran, dass durch die gedämpfte Beweglichkeit ein Abstand zwischen der Lauffläche des Obertrums und der Lauffläche des Untertrums konstant bleiben kann oder jedenfalls nur einer geringen Veränderung unterzogen ist, wenn die Rollen aufeinandertreffen. Beispielsweise können die Rollen im Normalzustand in der ersten Position vorliegen, also aus der Lauffläche herausragen. Der Normalzustand kann insbesondere vorliegen, soweit nicht zwei Rollen aufeinandertreffen. Treffen zwei Rollen aufeinander, können beide Rollen derart in die jeweilige Lauffläche hinein bewegt werden, dass beide Rollen nicht mehr oder nur noch weniger aus dieser Lauffläche herausragen. Alternativ kann eine der beiden Rollen unverändert bleiben und die andere der beiden Rollen derart in die jeweilige Lauffläche hinein bewegt werden, dass diese Rolle nicht mehr oder nur noch weniger aus dieser Lauffläche herausragt. Die Bewegung der beiden Rollen beziehungsweise der einen Rolle in die Lauffläche hinein erfolgt vorzugsweise genau in dem Maße, dass der Abstand der beiden Laufflächen zueinander konstant bleibt, wenn die Rollen aufeinandertreffen. Dazu können beispielsweise beide Rollen derart in die jeweilige Lauffläche hinein bewegt werden, dass die Rollen nur noch halb so weit aus der jeweiligen Lauffläche herausragen wie im Normalzustand. Alternativ kann eine der beiden Rollen vollständig in die jeweilige Lauffläche hineinbewegt werden, so dass diese Rolle gar nicht mehr aus der Lauffläche herausragt. Die andere der beiden Rollen kann in der ersten Position verbleiben.

Treffen zwei Rollen aufeinander, kommt es also zu keinem Stoß oder nur zu einem abgeschwächten Stoß. Dies verhindert beziehungsweise reduziert Schwingungen in der Leitungsführungseinrichtung. Die Verminderung der Schwingungen geht dabei über eine bloße Dämpfung der Rollen hinaus. Das liegt daran, dass die beschriebene gedämpfte Beweglichkeit der Rollen insbesondere beim Aufeinandertreffen zweier Rollen von Bedeutung ist. Eine bloße Dämpfung zielt darauf ab, Stöße aufgrund von Unebenheiten in einer Lauffläche auszugleichen. Die Unebenheiten können dabei beliebiger Natur sein. Der Fall, dass zwei gleichermaßen beweglich gelagerte Rollen aufeinandertreffen, ist demgegenüber spezieller, weil nicht bloß eine beliebige Unebenheit ausgeglichen werden soll.

Eine Veränderlichkeit des Abstandes zwischen der Lauffläche und der Achse ist auf die erste Position der Rolle und auf eine zweite Position der Rolle begrenzt.

Die Rolle kann nur zwischen der ersten Position und der zweiten Position bewegt werden, nicht aber über die erste Position hinaus oder über die zweite Position hinaus. Diese Begrenzung kann durch Anschläge erzielt werden. Ist die Achse beispielsweise über Federn gelagert, kann durch die Begrenzung der Bewegung der Rolle eine Überbelastung der Federn verhindert werden.

Die Rolle ragt in der zweiten Position aus der Lauffläche heraus.

Die Rolle ragt also sowohl in der ersten Position als auch in der zweiten Position aus der Lauffläche heraus. Die Bewegung der Rolle quer zur Lauffläche beschränkt sich also darauf, dass ein Ausmaß dieses Herausragens veränderlich ist. Eine derart begrenzte Beweglichkeit der Rolle reduziert den konstruktiven Aufwand. Auch ist diese begrenzte Beweglichkeit ausreichend. Schließlich dient die gedämpfte Beweglichkeit des Abstandes zwischen der Achse und der Lauffläche vordergründig dazu, Stöße beim Aufeinandertreffen zweier Rollen zu vermeiden oder abzuschwächen. Das Ausmaß, um das die einzelnen Rollen dazu bewegt werden müssen, ist begrenzt. Beispielsweise kann die Höhe eines Spalts zwischen Obertrum und Untertrum konstant gehalten werden, indem zwei aufeinandertreffende Rollen jeweils um die Hälfte der Höhe dieses Spalts in die jeweilige Seitenlasche hineingedrückt werden. Sollten beliebige Unebenheiten auf der Lauffläche ausgeglichen werden, wäre es zu bevorzugen, dass die Rolle in der zweiten Position nicht aus der Lauffläche herausragt. Üblicherweise kommt es bei Leitungsführungseinrichtungen aber zu keinen Verunreinigungen oder Beschädigungen, die eine derart ausgeprägte Dämpfung erfordern würden. Es genügt also, dass die einzelnen Rollen ein wenig in die Seitenlaschen hineingedrückt werden können. Es ist nicht erforderlich, dass die Rollen vollständig in die Seitenlaschen gedrückt werden können.

Gemäß einer bevorzugten Ausführungsform der Seitenlasche ist ein Abstand zwischen der Lauffläche und der Achse in der ersten Position der Rolle um 0,5 % bis 10 % eines Rollendurchmessers kleiner als in der zweiten Position der Rolle.

Der Rollendurchmesser ist senkrecht zur Achse der Rolle definiert. Bei einer deformierbaren Rolle ist der Rollendurchmesser im Normalzustand definiert, in dem keine externe Kraft auf die Rolle wirkt. In Bezug auf diesen Rollendurchmesser ist die Veränderlichkeit des Abstandes zwischen der Achse und der Lauffläche definiert. Der Rollendurchmesser kann insbesondere entlang der Richtung gemessen werden, entlang derer die Achse und damit auch die Rolle bewegt werden kann. Die Rolle kann in dieser Richtung um 0,5 bis 10 % ihrer Ausdehnung bewegt werden. Das ist ausreichend, um Stöße beim Aufeinandertreffen zweier Rollen zu vermeiden oder zumindest abzuschwächen. Eine größere Beweglichkeit der Achse und ein entsprechend größerer konstruktiver Aufwand sind entbehrlich. Folglich ist die Konstruktion der Seitenlasche in der vorliegenden Ausführungsform besonders einfach.

Gemäß einer weiteren bevorzugten Ausführungsform weist die Seitenlasche einen Rollenhalter auf, in dem die Rolle gelagert ist und der über eine Dämpfungseinrichtung in einer Aufnahme der Seitenlasche gehalten ist.

Die Seitenlasche weist eine Aufnahme auf, in der der Rollenhalter Platz findet. Die Aufnahme ist vorzugsweise derart größer als der Rollenhalter, dass die Bewegung der Rolle quer zur Lauffläche zwischen der ersten Position und der zweiten Position durch Bewegung des Rollenhalters innerhalb der Aufnahme möglich ist.

Der Rollenhalter ist über die Dämpfungseinrichtung in der Aufnahme gehalten. Insoweit ist der Rollenhalter gedämpft innerhalb der Aufnahme beweglich. Die Rolle ist vorzugsweise derart in dem Rollenhalter gelagert, dass die Achse der Rolle mit dem Rollenhalter bewegt werden kann. Folglich kann auch die Rolle durch die Bewegung des Rollenhalters bewegt werden.

Die Lagerung der Rolle am Rollenhalter ist beispielsweise dadurch möglich, dass ein erster Teil des Rollenhalters auf einer ersten Seite der Rolle angeordnet ist und dass ein zweiter Teil des Rollenhalters auf einer der ersten Seite gegenüberliegenden zweiten Seite der Rolle angeordnet ist. Die Achse erstreckt sich in dem Fall vorzugsweise von dem ersten Teil des Rollenhalters durch die Rolle zu dem zweiten Teil des Rollenhalters.

Gemäß einer weiteren bevorzugten Ausführungsform der Seitenlasche weist der Rollenhalter einen ersten Anschlag auf, der in der ersten Position der Rolle einen Rand der Aufnahme berührt, wodurch die Veränderlichkeit des Abstandes zwischen der Lauffläche und der Achse begrenzt ist.

Gemäß einer weiteren bevorzugten Ausführungsform der Seitenlasche weist der Rollenhalter einen zweiten Anschlag auf, der in der zweiten Position der Rolle einen Rand der Aufnahme berührt, wodurch die Veränderlichkeit des Abstandes zwischen der Lauffläche und der Achse begrenzt ist.

Bevorzugt ist die Kombination dieser beiden Ausführungsformen. Dabei weist der Rollenhalter sowohl den ersten Anschlag als auch den zweiten Anschlag auf.

Der Rollenhalter kann in der Aufnahme bewegt werden, um die Veränderlichkeit des Abstandes zwischen der Lauffläche und der Achse zu ermöglichen. Vorzugsweise kann die Rolle nur zwischen der ersten Position und der zweiten Position bewegt werden, nicht aber über die erste Position beziehungsweise über die zweite Position hinaus. Diese Begrenzung ist durch den entsprechenden Anschlag möglich. Stößt der Rollenhalter an den Rand der Aufnahme, kann der Rollenhalter und damit auch die Rolle nicht weiterbewegt werden. In der ersten Position berührt der erste Anschlag den Rand der Aufnahme und/oder in der zweiten Position berührt der zweite Anschlag den Rand der Aufnahme. Der erste Anschlag berührt in der ersten Position einen anderen Teil des Randes der Aufnahme als der zweite Anschlag in der zweiten Position.

Der erste Anschlag ist vorzugsweise durch eine der Lauffläche zugewandte erste Seite des Rollenhalters gebildet. Weist der Rollenhalter einen ersten Teil auf der ersten Seite der Rolle und einen zweiten Teil auf der zweiten Seite der Rolle auf, ist der erste Anschlag vorzugsweise durch eine der Lauffläche zugewandte erste Seite des ersten Teils und eine der Lauffläche zugewandte erste Seite des zweiten Teils gebildet. Der erste Anschlag muss also nicht als eine zusammenhängende Fläche ausgebildet sein, sondern kann sich auch aus mehreren Teilstücken zusammensetzen, die insbesondere durch die Rolle voneinander getrennt sein können.

Entsprechend ist der zweite Anschlag vorzugsweise durch eine der Lauffläche abgewandte zweite Seite des Rollenhalters gebildet. Weist der Rollenhalter einen ersten Teil auf der ersten Seite der Rolle und einen zweiter Teil auf der zweiten Seite der Rolle auf, ist der zweite Anschlag vorzugsweise durch eine der Lauffläche abgewandte zweite Seite des ersten Teils und eine der Lauffläche abgewandte zweite Seite des zweiten Teils gebildet. Der zweite Anschlag muss also nicht als eine zusammenhängende Fläche ausgebildet sein, sondern kann sich auch aus mehreren Teilstücken zusammensetzen, die insbesondere durch die Rolle voneinander getrennt sein können.

Gemäß einer weiteren bevorzugten Ausführungsform der Seitenlasche weist die Dämpfungseinrichtung vier Dämpfer auf, die in Form eines zur Lauffläche parallel angeordneten Rechtecks angeordnet sind.

Bei den Dämpfern handelt es sich vorzugsweise um Federn, um Elemente aus flexiblem Kunststoff oder um pneumatische und/oder hydraulische Dämpfer.

Die Anordnung in Form eines Rechtecks liegt vor, wenn sich die Dämpfer in den vier Ecken des Rechtecks befinden. Die Kanten des Rechtecks müssen nicht durch körperliche Merkmale ausgeprägt sein. Es genügt, dass die Dämpfer derart angeordnet sind, dass durch diese ein gedachtes Rechteck aufgespannt wird.

Insbesondere in dieser Ausführungsform ist es bevorzugt, dass der Rollenhalter einen ersten Teil auf der ersten Seite der Rolle und einen zweiten Teil auf der zweiten Seite der Rolle aufweist. Jeder der beiden Teile kann in dieser Ausführungsform durch jeweils zwei Dämpfer gedämpft werden.

Bevorzugt sind zwei zueinander parallele Seiten des Rechtecks parallel zu einer Achse der Rolle.

Es hat sich herausgestellt, dass durch die beschriebene Anordnung der Dämpfer die Rolle besonders zuverlässig aus der Lauffläche herausbewegt werden kann, wenn die Rolle auf eine andere Rolle trifft. Insbesondere kann durch die symmetrische Anordnung der Dämpfer verhindert werden, dass eine Achse der Rolle verkippt.

Gemäß einer weiteren bevorzugten Ausführungsform der Seitenlasche weist der Rollenhalter eine der Lauffläche zugewandte erste Seite auf, welche in Richtung auf die Lauffläche zu gewölbt ist.

Die Wölbung der ersten Seite liegt vorzugsweise nur bei Betrachtung in einer Ebene vor, die senkrecht zur Lauffläche und senkrecht zur Achse der Rolle steht. Vorzugsweise ist der Teil des Randes der Aufnahme, den die erste Seite des Rollenhalters in der ersten Position berührt, gleichermaßen gewölbt. Die erste Seite des Rollenhalters kann also in der ersten Position mit diesem Teil des Randes vollflächig in Kontakt stehen. Insoweit bildet die erste Seite des Rollenhalters den ersten Anschlag. Durch die Wölbung begrenzt der erste Anschlag nicht bloß die Bewegung der Rolle quer zur Lauffläche. Zudem sorgt die Wölbung auch für eine Zentrierung des Rollenhalters. Dies kann den Rollenhalter und die Rolle stabilisieren.

Weist der Rollenhalter einen ersten Teil auf der ersten Seite der Rolle und einen zweiten Teil auf der zweiten Seite der Rolle auf, so ist es bevorzugt, dass der erste Teil des Rollenhalters und der zweite Teil des Rollenhalters eine jeweilige der Lauffläche zugewandte erste Seite aufweisen, welche jeweils in Richtung auf die Lauffläche zu gewölbt ist.

Gemäß einer weiteren bevorzugten Ausführungsform der Seitenlasche weist der Rollenhalter eine von der Lauffläche abgewandte zweite Seite auf, welche in einem zentralen Bereich in Richtung von der Lauffläche weg gewölbt ist.

Gemäß einer weiteren bevorzugten Ausführungsform der Seitenlasche weist die zweite Seite des Rollenhalters außerhalb des zentralen Bereichs zwei zur Lauffläche parallele Plateaus auf, an welchen jeweils ein Dämpfer der Dämpfungseinrichtung angreift.

Bevorzugt ist die Kombination dieser beiden Ausführungsformen. Dabei weist der Rollenhalter eine von der Lauffläche abgewandte zweite Seite auf, welche in einem zentralen Bereich in Richtung von der Lauffläche weg gewölbt ist und welche außerhalb des zentralen Bereichs zwei zur Lauffläche parallele Plateaus aufweist, an welchen jeweils ein Dämpfer der Dämpfungseinrichtung angreift.

Die Wölbung der zweiten Seite im zentralen Bereich liegt vorzugsweise nur bei Betrachtung in einer Ebene vor, die senkrecht zur Lauffläche und senkrecht zur Achse der Rolle steht. Vorzugsweise ist der Teil des Randes der Aufnahme, den der zentrale Bereich der zweiten Seite des Rollenhalters in der zweiten Position berührt, gleichermaßen gewölbt. Der zentrale Bereich der zweiten Seite des Rollenhalters kann also in der zweiten Position mit diesem Teil des Randes vollflächig in Kontakt stehen. Insoweit bildet der zentrale Bereich der zweiten Seite des Rollenhalters den zweiten Anschlag. Durch die Wölbung begrenzt der zweite Anschlag nicht bloß die Bewegung der Rolle quer zur Lauffläche. Zudem sorgt die Wölbung auch für eine Zentrierung des Rollenhalters. Dies kann den Rollenhalter und die Rolle stabilisieren.

Weist der Rollenhalter einen ersten Teil auf der ersten Seite der Rolle und einen zweiten Teil auf der zweiten Seite der Rolle auf, so ist es bevorzugt, dass der erste Teil des Rollenhalters und der zweite Teil des Rollenhalters eine jeweilige von der Lauffläche abgewandte zweite Seite aufweisen, welche in einem jeweiligen zentralen Bereich in Richtung von der Lauffläche weg gewölbt sind. Außerhalb des zentralen Bereichs weisen diese zweiten Seiten vorzugsweise jeweils zwei zur Lauffläche parallele Plateaus auf, an welchen jeweils ein Dämpfer der Dämpfungseinrichtung angreift. Der Rollenhalter weist damit insgesamt vier der Plateaus auf, so dass vier Dämpfer aufgenommen werden können.

Liegt die Wölbung der zweiten Seite im zentralen Bereich nur bei Betrachtung in einer Ebene vor, die senkrecht zur Lauffläche und senkrecht zur Achse der Rolle steht, ist vorzugsweise auf beiden Seiten der Wölbung ein jeweiliges Plateau vorgesehen, welches an die Wölbung anschließt.

Es hat sich herausgestellt, dass die Dämpfer durch die Ausbildung der Plateaus auf besonders kompakte Weise an den Rollenhalter angreifen können.

Gemäß einem weiteren Aspekt der Erfindung wird ein Glied für eine Leitungsführungseinrichtung vorgestellt. Das Glied umfasst mindestens zwei parallel zueinander angeordnete Seitenlaschen, welche über mindestens einen Quersteg miteinander verbunden sind. Mindestens eine der beiden Seitenlaschen ist wie beschrieben ausgebildet.

Die beschriebenen besonderen Vorteile und Ausgestaltungsmerkmale der Seitenlasche sind auf das Glied anwendbar und übertragbar, und umgekehrt.

Vorzugsweise weist das Glied genau zwei der Seitenlaschen auf. In dem Fall ist das beschriebene Glied für eine Leitungsführungseinrichtung geeignet, welche genau zwei Seitenlaschenstränge aufweist. Eine erste der beiden Seitenlaschen des beschriebenen Gliedes kann Teil eines ersten dieser beiden Seitenlaschenstränge sein; eine zweite der beiden Seitenlaschen des beschriebenen Gliedes kann Teil eines zweiten dieser beiden Seitenlaschenstränge sein.

Die beiden Seitenlaschen sind parallel zueinander angeordnet, so dass zwei parallele Seitenlaschenstränge erhalten werden können. Zwischen den beiden Seitenlaschensträngen können die Leitungen angeordnet werden, die mit der beschriebenen Leitungsführungseinrichtung geführt werden.

Die Laufflächen der beiden Seitenlaschen sind parallel zueinander ausgerichtet. Vorzugsweise liegen die Laufflächen der beiden Seitenlaschen in einer gemeinsamen (gedachten) Ebene.

Vorzugweise sind alle Seitenlaschen des Gliedes wie beschrieben ausgebildet. Das Glied kann aber auch eine oder mehrere Seitenlaschen aufweisen, die anders ausgebildet sind, insbesondere indem in diesen Seitenlaschen keine Rolle vorgesehen ist. Diese Seitenlaschen weisen vorzugsweise jedenfalls einen sich in eine Längsrichtung der entsprechenden Seitenlasche erstreckenden Längsrand auf, an welchem eine entsprechende Lauffläche gebildet ist. Diese Seitenlaschen haben also zwar keine Rolle, bilden aber zumindest einen Teil der Lauffläche.

Gemäß einem weiteren Aspekt der Erfindung wird eine Leitungsführungseinrichtung mit einer Vielzahl von gelenkig miteinander verbundenen Gliedern vorgestellt. Die Glieder bilden eine Schlaufe aus einem Obertrum, einem Umlenkbereich und einem Untertrum. Seitenlaschen der Glieder bilden mindestens einen Seitenlaschenstrang mit einer jeweiligen Lauffläche an einer Schlaufeninnenseite. Zumindest ein Teil der Glieder umfasst jeweils mindestens eine Seitenlasche, welche
- einen sich in eine Längsrichtung der Seitenlasche erstreckenden Längsrand aufweist, an welchem ein Teil der Lauffläche des entsprechenden Seitenlaschenstrangs gebildet ist, und
- eine Rolle aufweist, die um eine Achse drehbar gelagert ist, wobei die Achse parallel zur Lauffläche der entsprechenden Seitenlasche und senkrecht zur Längsrichtung angeordnet ist, wobei ein Abstand zwischen der Lauffläche der entsprechenden Seitenlasche und der Achse gedämpft veränderlich ist, und wobei die Rolle zumindest in einer ersten Position aus der Lauffläche der entsprechenden Seitenlasche herausragt.

Das Obertrum und das Untertrum können über die Lauffläche des mindestens einen Seitenlaschenstrangs derart aneinander anliegen, dass das Obertrum und das Untertrum mittels der Rollen relativ zueinander verfahrbar sind.

Die beschriebenen besonderen Vorteile und Ausgestaltungsmerkmale der Seitenlasche und des Gliedes sind auf die Leitungsführungseinrichtung anwendbar und übertragbar, und umgekehrt. Insbesondere ist es bevorzugt, dass mindestens eine der Seitenlaschen der Glieder mit einer Rolle, vorzugsweise alle Seitenlaschen der Glieder mit einer Rolle, wie beschrieben ausgebildet sind. Das bedeutet, dass diese Seitenlaschen die beschriebenen Merkmale und, optional, auch eines oder mehrere der als bevorzugt beschriebenen Merkmale der Seitenlasche aufweisen. Dies gilt für jede der Seitenlaschen jedes der Glieder mit Rolle jeweils einzeln, so dass diese Glieder nicht identisch zueinander ausgebildet sein müssen. Allerdings ist es bevorzugt, dass die Glieder mit einer Rolle identisch zueinander ausgebildet sind. Die Leitungsführungseinrichtung kann auch Glieder ohne Rolle aufweisen. Diese umfassen vorzugsweise mindestens eine Seitenlasche mit einer Lauffläche. Die Lauffläche eines Seitenlaschenstrangs wird durch die Laufflächen der Glieder (mit oder ohne Rolle) dieses Seitenlaschenstrangs gebildet. Es ist nicht erforderlich, dass die Lauffläche durchgehend ausgebildet ist. Insbesondere kann die Leitungsführungseinrichtung Glieder mit oder ohne Rolle aufweisen, die anders als beschrieben ausgebildet sind. Durch derartige Glieder kann die Lauffläche auch unterbrochen sein.

Die Glieder der Leitungsführungseinrichtung sind vorzugsweise derart gelenkig miteinander verbunden, dass die Schlaufe aus Obertrum, Umlenkbereich und Untertrum durch die Glieder gebildet werden kann. Insbesondere ist es bevorzugt, dass benachbarte Glieder um eine Schwenkachse gegeneinander verschwenkbar sind, welche parallel zur Lauffläche und senkrecht zur Ausbreitungsrichtung der Leitungsführungseinrichtung ausgebildet ist. Die Schwenkachsen sind vorzugsweise parallel zu den Achsen der Rollen angeordnet.

Die Schlaufe hat eine Schlaufeninnenseite und eine Schlaufenaußenseite. Die Lauffläche oder die mehreren Laufflächen sind an der Schlaufeninnenseite ausgebildet. Das Obertrum und das Untertrum können über die jeweiligen Schlaufeninnenseiten aneinander vorbeigeführt werden, insbesondere mittels der Rollen. Das bedeutet, dass Rollen der Glieder des Obertrums auf Laufflächen der Glieder des Untertrums rollen können und dass Rollen der Glieder des Untertrums auf Laufflächen der Glieder des Obertrums rollen können.

Die Erfindung sowie das technische Umfeld werden nachfolgend anhand der Figuren näher erläutert. Es ist darauf hinzuweisen, dass die Erfindung durch das gezeigte Ausführungsbeispiel nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Seitenansicht auf eine erfindungsgemäße Leitungsführungseinrichtung,
- Fig. 2:: eine erste perspektivische Ansicht auf einen Teil eines Gliedes der Leitungsführungseinrichtung aus Fig. 1,
- Fig. 3:: eine zweite perspektivische Ansicht auf einen Teil des Gliedes aus Fig. 2,
- Fig. 4:: eine Schnittdarstellung des Gliedes aus den Fig. 2 und 3,
- Fig. 5:: eine erste Seitenansicht des Gliedes aus Fig. 2 bis 4,
- Fig. 6:: eine zweite Seitenansicht des Gliedes aus Fig. 2 bis 5,
- Fig. 7:: eine erste seitliche Schnittdarstellung eines Teils der Leitungsführungseinrichtung aus Fig. 1, und
- Fig. 8:: eine zweite seitliche Schnittdarstellung eines Teils der Leitungsführungseinrichtung aus Fig. 1.

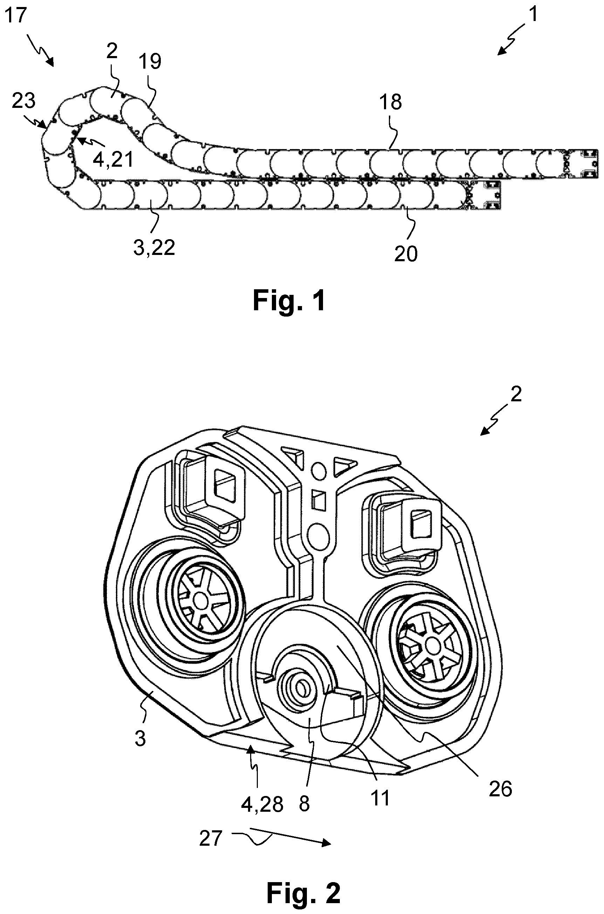

Fig. 1 zeigt eine Leitungsführungseinrichtung 1 mit einer Vielzahl von gelenkig miteinander verbundenen Gliedern 2. Die Glieder 2 bilden eine Schlaufe 17 aus einem Obertrum 18, einem Umlenkbereich 19 und einem Untertrum 20. Das Obertrum 18 liegt - bis auf einen Spalt - auf dem Untertrum 20 auf. Seitenlaschen 3 der Glieder 2 bilden zwei Seitenlaschenstränge 22 mit einer jeweiligen Lauffläche 4. In der Darstellung der Fig. 1 ist nur einer der Seitenlaschenstränge 22 zu erkennen; ein weiterer zu diesem identisch ausgebildeter Seitenlaschenstrang ist senkrecht zur Zeichenebene hinter dem gezeigten Seitenlaschenstrang 22 angeordnet. Über Querstege, die senkrecht zur Zeichenebene ausgerichtet sind, sind die Seitenlaschenstränge 22 miteinander verbunden. Die Schlaufe 17 hat eine Schlaufeninnenseite 21 und eine Schlaufenaußenseite 23. Die Lauffläche 4 ist an der Schlaufeninnenseite 21 ausgebildet.

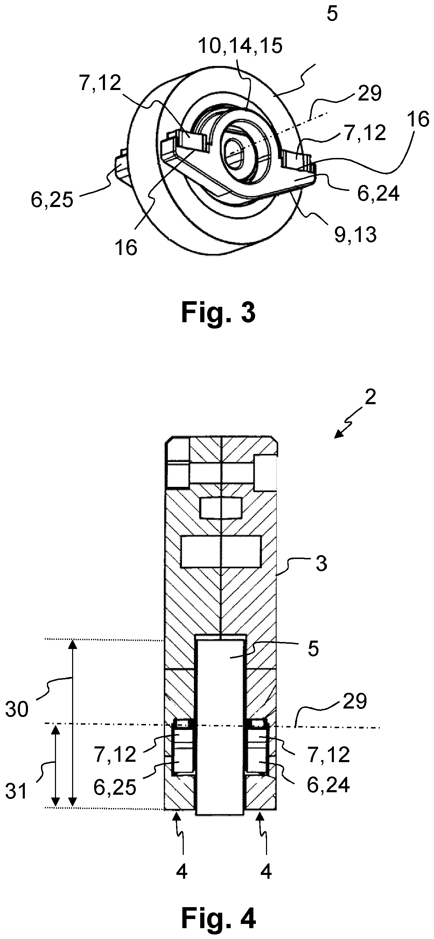

Fig. 2 zeigt eine erste perspektivische Ansicht auf einen Teil eines Gliedes 2 der Leitungsführungseinrichtung 1 aus Fig. 1. Das Glied 2 weist eine Seitenlasche 3 auf, die nur teilweise gezeigt ist. Die Seitenlasche 3 weist eine Rollenaufnahme 26 und eine Aufnahme 8 für einen (in den Fig. 3 bis 6 gezeigten) Rollenhalter 6 auf. Ein Rand 11 der Aufnahme 8 ist eingezeichnet. Auch ist die Lauffläche 4 eingezeichnet. Die Lauffläche 4 ist an einem Längsrand 28 der Seitenlasche 3 ausgebildet. Der Längsrand 28 erstreckt sich in eine Längsrichtung 27 der Seitenlasche 3.

Fig. 3 zeigt eine zweite perspektivische Ansicht auf einen (anderen) Teil des Gliedes 2 aus Fig. 2. Gezeigt ist hier eine Rolle 5 mit dem Rollenhalter 6. Der Rollenhalter 6 weist einen ersten Teil 24 und einen zweiten Teil 25 auf, die auf verschiedenen Seiten der Rolle 5 angeordnet sind. Die Rolle 5 ist um eine Achse 29 drehbar gelagert. Die Achse 29 ist parallel zu der beispielsweise in Fig. 2 gezeigten Lauffläche 4 und senkrecht zu der ebenfalls in Fig. 2 gezeigten Längsrichtung 27 angeordnet.

Weiterhin ist eine Dämpfungseinrichtung 7 eingezeichnet. Diese weist vier Dämpfer 12 auf, von denen zwei zu erkennen sind. Die beiden in der Ansicht von Fig. 3 verdeckten Dämpfer sind so am zweiten Teil 25 des Rollenhalters 6 angeordnet wie die beiden zu erkennenden Dämpfer 12 am ersten Teil 24 des Rollenhalters 6. Die vier Dämpfer 12 sind in Form eines zur Lauffläche 4 parallel angeordneten Rechtecks angeordnet. Das Rechteck ist nur gedacht. Die Kanten des Rechtecks sind nicht durch körperliche Merkmale ausgeprägt.

Der Rollenhalter 6 weist eine (im eingebauten Zustand) der Lauffläche 4 zugewandte erste Seite 13 auf, welche in Richtung auf die Lauffläche 4 zu gewölbt ist. Dies gilt sowohl für den ersten Teil 24 des Rollenhalters 6 als auch für den zweiten Teil 25 des Rollenhalters 6. Die erste Seite 13 bildet einen ersten Anschlag 9. Der Rollenhalter 6 weist zudem eine (im eingebauten Zustand) von der Lauffläche 4 abgewandte zweite Seite 14 auf, welche in einem zentralen Bereich 15 in Richtung von der Lauffläche 4 weg gewölbt ist. Auch dies gilt sowohl für den ersten Teil 24 des Rollenhalters 6 als auch für den zweiten Teil 25 des Rollenhalters 6. Die zweite Seite 14 des Rollenhalters 6 weist außerhalb des zentralen Bereichs 15 zwei zur Lauffläche 4 parallele Plateaus 16 auf, an welchen jeweils einer der Dämpfer 12 der Dämpfungseinrichtung 7 angreift. Auch dies gilt sowohl für den ersten Teil 24 des Rollenhalters 6 als auch für den zweiten Teil 25 des Rollenhalters 6, so dass die Dämpfungseinrichtung 7 insgesamt vier Dämpfer 12 aufweist. Die zweite Seite 14 bildet einen zweiten Anschlag 10.

Fig. 4 zeigt eine Schnittdarstellung einer Seitenlasche 3 des Gliedes 2 aus den Fig. 2 und 3. Zu erkennen ist, dass das Glied 2 in der gezeigten Seitenlasche 3 die Rolle 5 aufweist, die aus der Lauffläche 4 herausragt. Der Rollenhalter 6 mit dem ersten Teil 24 und dem zweiten Teil 25 ist ebenfalls zu erkennen. Auch ist die Dämpfungseinrichtung 7 mit den Dämpfern 12 zu erkennen.

Ferner ist ein Abstand 31 zwischen der Achse 29 und der Lauffläche 4 eingezeichnet. Dieser ist gedämpft zwischen einer ersten Position der Rolle und einer zweiten Position der Rolle veränderlich. Die Veränderlichkeit des Abstandes 31 ist also auf die erste Position und die zweite Position der Rolle 5 begrenzt. Weiterhin ist ein Rollendurchmesser 30 eingezeichnet. Der Abstand 31 ist in der ersten Position der Rolle 5 um 0,5 % bis 10 % des Rollendurchmessers 30 kleiner als in der zweiten Position der Rolle 5.

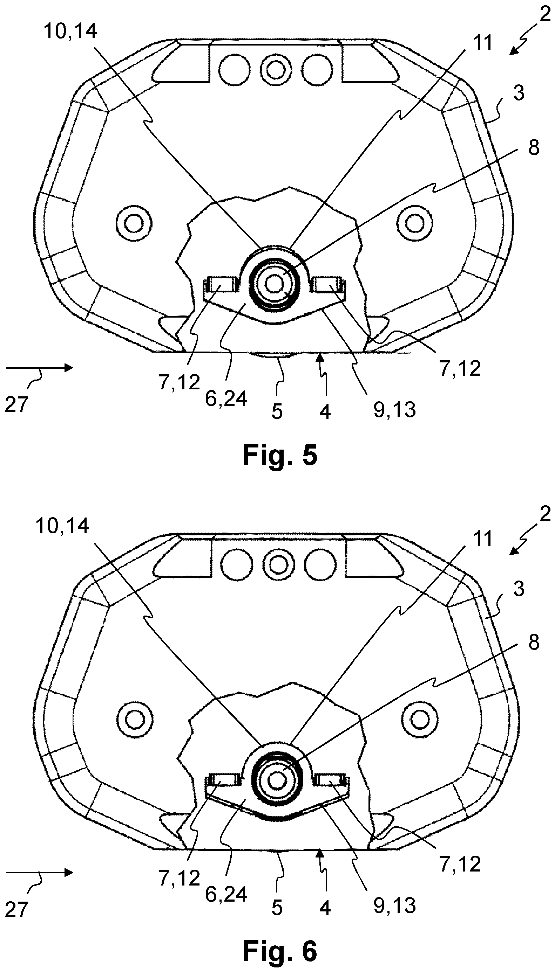

Die Fig. 5 und 6 zeigen einander weitgehend entsprechende Seitenansichten des Gliedes 2 aus den Fig. 2 bis 4. Zu erkennen ist, dass die Rolle 5 derart gelagert ist, dass der Abstand 31 zwischen der Lauffläche 4 und der Achse 29 zwischen einer ersten Position (Fig. 5) und einer zweiten Position (Fig. 6) gedämpft veränderlich ist. Sowohl in der ersten Position (Fig. 5) als auch in der zweiten Position (Fig. 6) ragt die Rolle 5 aus der Lauffläche 4 heraus. Gemäß einer nicht erfindungsgemäßen Alternative könnte die Rolle 5 aber auch derart gelagert sein, dass die Rolle 5 in der zweiten Position (im Gegensatz zur Ausführungsform in Fig. 6) nicht aus der Lauffläche 4 herausragt.

Zu erkennen ist an Fig. 5 und 6 weiterhin, dass die Seitenlasche 3 den Rollenhalter 6 aufweist, von dem jeweils nur der erste Teil 24 zu erkennen ist. In dem Rollenhalter 6 ist die Rolle 5 gelagert. Über die Dämpfungseinrichtung 7 mit den Dämpfern 12 ist der Rollenhalter 6 in der Aufnahme 8 der Seitenlasche 3 gehalten.

Der Rollenhalter 6 weist einen ersten Anschlag 9 auf, der in der ersten Position (Fig. 5) der Rolle 5 einen Rand 11 der Aufnahme 8 berührt, wodurch die Veränderlichkeit des Abstandes 31 begrenzt ist. Der erste Anschlag 9 ist an einer ersten Seite 13 des Rollenhalters 6 gebildet. Zudem weist der Rollenhalter 6 einen zweiten Anschlag 10 auf, der in der zweiten Position (Fig. 6) der Rolle 5 einen Rand 11 der Aufnahme 8 berührt, wodurch die Veränderlichkeit des Abstandes 31 begrenzt ist. Der zweite Anschlag 10 ist an einer zweiten Seite 14 des Rollenhalters 6 gebildet.

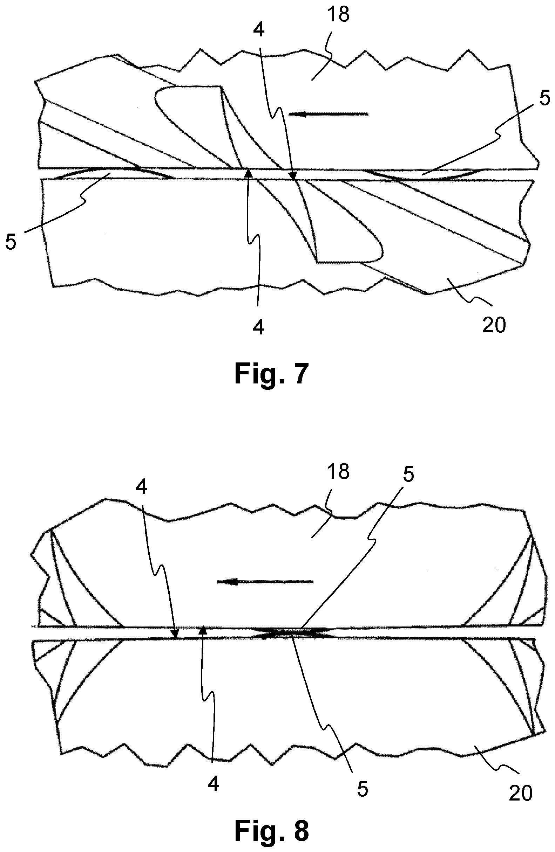

Fig. 7 und 8 zeigen seitliche Schnittdarstellungen eines Teils der Leitungsführungseinrichtung 1 aus Fig. 1. Zu erkennen ist, dass das Obertrum 18 und das Untertrum 20 über die Lauffläche 4 derart miteinander wechselwirken, dass das Obertrum 18 und das Untertrum 20 mittels der Rollen 5 relativ zueinander verfahrbar sind.

### Bezugszeichenliste

- 1: Leitungsführungseinrichtung
- 2: Glied
- 3: Seitenlasche
- 4: Lauffläche
- 5: Rolle
- 6: Rollenhalter
- 7: Dämpfungseinrichtung
- 8: Aufnahme
- 9: erster Anschlag
- 10: zweiter Anschlag
- 11: Rand
- 12: Dämpfer
- 13: erste Seite
- 14: zweite Seite
- 15: zentraler Bereich
- 16: Plateau
- 17: Schlaufe
- 18: Obertrum
- 19: Umlenkbereich
- 20: Untertrum
- 21: Schlaufeninnenseite
- 22: Seitenlaschenstrang
- 23: Schlaufenaußenseite
- 24: erster Teil
- 25: zweiter Teil
- 26: Rollenaufnahme
- 27: Längsrichtung
- 28: Längsrand
- 29: Achse
- 30: Rollendurchmesser
- 31: Abstand

## Patentansprüche

1. Seitenlasche (3) für ein Glied (2) für eine Leitungsführungseinrichtung (1), wobei die Seitenlasche (3) einen sich in eine Längsrichtung (27) der Seitenlasche (3) erstreckenden Längsrand (28) aufweist, an welchem eine Lauffläche (4) gebildet ist, wobei die Seitenlasche (3) eine Rolle (5) aufweist, die um eine Achse (29) drehbar gelagert ist, wobei die Achse (29) parallel zur Lauffläche (4) und senkrecht zur Längsrichtung (27) angeordnet ist, wobei ein Abstand (31) zwischen der Lauffläche (4) und der Achse (29) gedämpft veränderlich ist, und wobei die Rolle (5) zumindest in einer ersten Position aus der Lauffläche (4) herausragt, **dadurch gekennzeichnet, dass** eine Veränderlichkeit des Abstandes (31) zwischen der Lauffläche (4) und der Achse (29) auf die erste Position der Rolle (5) und auf eine zweite Position der Rolle (5) begrenzt ist und wobei die Rolle (5) in der zweiten Position aus der Lauffläche (4) herausragt.

2. Seitenlasche (3) nach Anspruch 1, wobei der Abstand (31) zwischen der Lauffläche (4) und der Achse (29) in der ersten Position der Rolle (5) um 0,5 % bis 10% eines Rollendurchmessers (30) kleiner ist als in der zweiten Position der Rolle (5).

3. Seitenlasche (3) nach einem der vorstehenden Ansprüche, weiterhin aufweisend einen Rollenhalter (6), in dem die Rolle (5) gelagert ist und der über eine Dämpfungseinrichtung (7) in einer Aufnahme (8) der Seitenlasche (3) gehalten ist.

4. Seitenlasche (3) nach Anspruch 3, wobei der Rollenhalter (6) einen ersten Anschlag (9) aufweist, der in der ersten Position der Rolle (5) einen Rand (11) der Aufnahme (8) berührt, wodurch die Veränderlichkeit des Abstandes (31) zwischen der Lauffläche (4) und der Achse (29) begrenzt ist.

5. Seitenlasche (3) nach Anspruch 3 oder 4, wobei der Rollenhalter (6) einen zweiten Anschlag (10) aufweist, der in einer zweiten Position der Rolle (5) einen Rand (11) der Aufnahme (8) berührt, wodurch die Veränderlichkeit des Abstandes (31) zwischen der Lauffläche (4) und der Achse (29) begrenzt ist.

6. Seitenlasche (3) nach einem der Ansprüche 3 bis 5, wobei die Dämpfungseinrichtung (7) vier Dämpfer (12) aufweist, die in Form eines zur Lauffläche (4) parallel angeordneten Rechtecks angeordnet sind.

7. Seitenlasche (3) nach einem der Ansprüche 3 bis 6, wobei der Rollenhalter (6) eine der Lauffläche (4) zugewandte erste Seite (13) aufweist, welche in Richtung auf die Lauffläche (4) zu gewölbt ist.

8. Seitenlasche (3) nach einem der Ansprüche 3 bis 7, wobei der Rollenhalter (6) eine von der Lauffläche (4) abgewandte zweite Seite (14) aufweist, welche in einem zentralen Bereich (15) in Richtung von der Lauffläche (4) weg gewölbt ist.

9. Seitenlasche (3) nach Anspruch 8, wobei die zweite Seite (14) des Rollenhalters (6) außerhalb des zentralen Bereichs (15) zwei zur Lauffläche (4) parallele Plateaus (16) aufweist, an welchen jeweils ein Dämpfer (12) der Dämpfungseinrichtung (7) angreift.

10. Glied (2) für eine Leitungsführungseinrichtung (1), umfassend mindestens zwei parallel zueinander angeordnete Seitenlaschen (3), welche über mindestens einen Quersteg miteinander verbunden sind, und wobei mindestens eine der beiden Seitenlaschen (3) nach einem der Ansprüche 1 bis 11 ausgebildet ist.

11. Leitungsführungseinrichtung (1) mit einer Vielzahl von gelenkig miteinander verbundenen Gliedern (2), welche eine Schlaufe (17) aus einem Obertrum (18), einem Umlenkbereich (19) und einem Untertrum (20) bilden, wobei Seitenlaschen (3) der Glieder (2) mindestens einen Seitenlaschenstrang (22) mit einer jeweiligen Lauffläche (4) an einer Schlaufeninnenseite (21) bilden, wobei zumindest ein Teil der Glieder (2) jeweils mindestens eine Seitenlasche (3) umfasst, welche
- einen sich in eine Längsrichtung (27) der Seitenlasche (3) erstreckenden Längsrand (28) aufweist, an welchem ein Teil der Lauffläche (4) des entsprechenden Seitenlaschenstrangs (22) gebildet ist, und
- eine Rolle (5) aufweist, die um eine Achse (29) drehbar gelagert ist, wobei die Achse (29) parallel zur Lauffläche (4) der entsprechenden Seitenlasche (3) und senkrecht zur Längsrichtung (27) angeordnet ist, wobei ein Abstand (31) zwischen der Lauffläche (4) der entsprechenden Seitenlasche (3) und der Achse (29) gedämpft veränderlich ist, und wobei die Rolle (5) zumindest in einer ersten Position aus der Lauffläche (4) der entsprechenden Seitenlasche (3) herausragt, wobei eine Veränderlichkeit des Abstandes (31) zwischen der Lauffläche (4) und der Achse (29) auf die erste Position der Rolle (5) und auf eine zweite Position der Rolle (5) begrenzt ist und wobei die Rolle (5) in der zweiten Position aus der Lauffläche (4) herausragt,
und wobei das Obertrum (18) und das Untertrum (19) über die Lauffläche (4) des mindestens einen Seitenlaschenstrangs (22) derart aneinander anliegen können, dass das Obertrum (18) und das Untertrum (20) mittels der Rollen (5) relativ zueinander verfahrbar sind.

12. Leitungsführungseinrichtung (1) nach Anspruch 11, wobei mindestens eine der Seitenlaschen (3) der Glieder (2) gemäß einem der Ansprüche 1 bis 9 ausgebildet sind.

## Claims

1. Side bracket (3) for a link (2) for a line-routing device (1), wherein the side bracket (3) has a longitudinal periphery (28) which extends in a longitudinal direction (27) of the side bracket (3) and on which a running surface (4) is formed, wherein the side bracket (3) has a roller (5) which is mounted so as to be rotatable about an axle (29), wherein the axle (29) is disposed so as to be parallel to the running surface (4) and perpendicular to the longitudinal direction (27), wherein a spacing (31) between the running surface (4) and the axle (29) is variable in a damped manner, and wherein the roller (5), at least in a first position, protrudes from the running surface (4), **characterized in that** a variability of the spacing (31) between the running surface (4) and the axle (29) is restricted to the first position of the roller (5) and to a second position of the roller (5), and wherein the roller (5) in the second position protrudes from the running surface (4).

2. Side bracket (3) according to Claim 1, wherein the spacing (31) between the running surface (4) and the axle (29) in the first position of the roller (5) is smaller by 0.5% to 10% of a roller diameter (30) than in the second position of the roller (5).

3. Side bracket (3) according to one of the preceding claims, furthermore having a roller support (6) in which the roller (5) is mounted and which is held in a receptacle (8) of the side bracket (3) by way of a damping device (7).

4. Side bracket (3) according to Claim 3, wherein the roller support (6) has a first detent (9) which, in the first position of the roller (5), contacts a periphery (11) of the receptacle (8), as a result of which the variability of the spacing (31) between the running surface (4) and the axle (29) is restricted.

5. Side bracket (3) according to Claim 3 or 4, wherein the roller support (6) has a second detent (10) which, in a second position of the roller (5), contacts a periphery (11) of the receptacle (8), as result of which the variability of the spacing (31) between the running surface (4) and the axle (29) is restricted.

6. Side bracket (3) according to one of Claims 3 to 5, wherein the damping device (7) has four dampers (12) which are disposed in the shape of a rectangle disposed so as to be parallel to the running surface (4).

7. Side bracket (3) according to one of Claims 3 to 6, wherein the roller support (6) has a first side (13) that faces the running surface (4) and is curved in the direction toward the running surface (4).

8. Side bracket (3) according to one of Claims 3 to 7, wherein the roller support (6) has a second side (14) facing away from the running surface (4), which is curved away in a central area (15) in the direction of the running surface (4).

9. Side bracket (3) according to Claim 8, wherein the second side (14) of the roller support (6) outside the central region (15) has two plateaus (16) which are parallel to the running surface (4), one damper (12) of the damping device (7) engaging on each of said two plateaus.

10. Link (2) for a line-routing device (1), comprising at least two side brackets (3) which are disposed so as to be mutually parallel and which are connected to one another by way of at least one transverse web, and wherein at least one of the two side brackets (3) is configured according to one of Claims 1 to 11.

11. Line-routing device (1) having a multiplicity of links (2) which are connected to one another in an articulated manner and which form a loop (17) composed of an upper lead (18), a deflection region (19), and a lower lead (20), wherein side brackets (3) of the links (2) form at least one side bracket strand (22) having a respective running surface (4) on a loop internal side (21), wherein at least some of the links (2) comprise in each case at least one side bracket (3) which
- has a longitudinal periphery (28) which extends in a longitudinal direction (27) of the side bracket (3) and on which part of the running surface (4) of the corresponding side bracket strand (22) is formed, and
- has a roller (5) which is mounted so as to be rotatable about an axle (29), wherein the axle (29) is disposed so as to be parallel to the running surface (4) of the corresponding side bracket (3) and perpendicular to the longitudinal direction (27), wherein a spacing (31) between the running surface (4) of the corresponding side bracket (3) and the axle (29) is variable in a damped manner, and wherein the roller (5), at least in a first position, protrudes from the running surface (4) of the corresponding side bracket (3), wherein a variability of the spacing (31) between the running surface (4) and the axle (29) is restricted to the first position of the roller (5) and to a second position of the roller (5), and wherein the roller (5) in the second position protrudes from the running surface (4),
and wherein the upper lead (18) and the lower lead (19), by way of the running surface (4) of the at least one side bracket strand (22), can bear on one another in such a manner that the upper lead (18) and the lower lead (20) are displaceable relative to one another by means of the rollers (5).

12. Line-routing device (1) according to Claim 11, wherein at least one of the side brackets (3) of the links (2) is configured according to one of Claims 1 to 9.

## Revendications

1. Plaquette latérale (3) pour un maillon (2) d'un dispositif (1) de guidage de câbles, la plaquette latérale (3) présentant un bord longitudinal (28) s'étendant dans une direction longitudinale (27) de la plaquette latérale (3), sur lequel est formée une surface de roulement (4), la plaquette latérale (3) présentant un galet (5) qui est monté de manière rotative autour d'un axe (29), l'axe (29) étant agencé parallèlement à la surface de roulement (4) et perpendiculairement à la direction longitudinale (27), une distance (31) entre la surface de roulement (4) et l'axe (29) étant apte à être modifiée de manière amortie, et le galet (5) dépassant de la surface de roulement (4) au moins dans une première position, **caractérisée en ce qu'**une variabilité de la distance (31) entre la surface de roulement (4) et l'axe (29) est limitée à la première position du galet (5) et à une deuxième position du galet (5), et le galet (5) dépasse de la surface de roulement (4) dans la deuxième position.

2. Plaquette latérale (3) selon la revendication 1, dans laquelle la distance (31) entre la surface de roulement (4) et l'axe (29) est plus petite de 0,5 % à 10 % d'un diamètre de galet (30) dans la première position du galet (5) que dans la deuxième position du galet (5).

3. Plaquette latérale (3) selon l'une des revendications précédentes, comprenant en outre un support (6) de galet dans lequel le galet (5) est logé et qui est maintenu dans un logement (8) de la plaquette latérale (3) par un dispositif d'amortissement (7).

4. Plaquette latérale (3) selon la revendication 3, dans laquelle le support (6) de galet présente une première butée (9) qui, dans la première position du galet (5), touche un bord (11) du logement (8), ce qui limite la variabilité de la distance (31) entre la surface de roulement (4) et l'axe (29).

5. Plaquette latérale (3) selon la revendication 3 ou la revendication 4, dans laquelle le support (6) de galet présente une deuxième butée (10) qui, dans une deuxième position du galet (5), touche un bord (11) du logement (8), ce qui limite la variabilité de la distance (31) entre la surface de roulement (4) et l'axe (29).

6. Plaquette latérale (3) selon l'une des revendications 3 à 5, dans laquelle le dispositif d'amortissement (7) comporte quatre amortisseurs (12) agencés selon une forme de rectangle agencé parallèlement à la surface de roulement (4).

7. Plaquette latérale (3) selon l'une des revendications 3 à 6, dans laquelle le support (6) de galet présente un premier côté (13) tourné vers la surface de roulement (4), qui est bombé en direction de la surface de roulement (4).

8. Plaquette latérale (3) selon l'une des revendications 3 à 7, dans laquelle le support (6) de galet présente un deuxième côté (14) opposé à la surface de roulement (4), lequel est bombé dans une zone centrale (15) dans la direction opposée à la surface de roulement (4).

9. Plaquette latérale (3) selon la revendication 8, dans laquelle le deuxième côté (14) du support (6) de galet présente, à l'extérieur de la zone centrale (15), deux plateaux (16) parallèles à la surface de roulement (4), sur chacun desquels agit un amortisseur (12) du dispositif d'amortissement (7).

10. Maillon (2) pour un dispositif (1) de guidage de câbles, comprenant au moins deux plaquettes latérales (3) agencées parallèlement l'une à l'autre, qui sont reliées entre elles par au moins une traverse, et au moins l'une des deux plaquettes latérales (3) étant réalisée selon l'une des revendications 1 à 11.

11. Dispositif (1) de guidage de câbles comprenant une pluralité de maillons (2) reliés entre eux de manière articulée, qui forment une boucle (17) constituée par un brin supérieur (18), une zone de renvoi (19) et un brin inférieur (20), des plaquettes latérales (3) des maillons (2) formant au moins un brin (22) de plaquettes latérales avec une surface de roulement (4) respective sur un côté intérieur (21) de boucle, des maillons d'au moins une partie des maillons (2) comprenant chacun au moins une plaquette latérale (3) qui
- présente un bord longitudinal (28) s'étendant dans la direction longitudinale (27) de la plaquette latérale (3), sur lequel est formée une partie de la surface de roulement (4) du brin correspondant (22) de plaquettes latérales, et
- présente un galet (5), monté rotatif autour d'un axe (29), l'axe (29) étant agencé parallèlement à la surface de roulement (4) de la plaquette latérale (3) correspondante et perpendiculairement à la direction longitudinale (27), une distance (31) entre la surface de roulement (4) de la plaquette latérale (3) correspondante et l'axe (29) étant apte à varier de manière amortie, et le galet (5) dépassant de la surface de roulement (4) de la plaquette latérale (3) correspondante au moins dans une première position, une variabilité de la distance (31) entre la surface de roulement (4) et l'axe (29) étant limitée à la première position du galet (5) et à une deuxième position du galet (5), le galet (5) dépassant de la surface de roulement (4) dans la deuxième position,
et le brin supérieur (18) et le brin inférieur (19) étant aptes à être appliqués l'un contre l'autre par l'intermédiaire de la surface de roulement (4) dudit au moins un brin (22) de plaquettes latérales de telle sorte que le brin supérieur (18) et le brin inférieur (20) soient aptes à être déplacés l'un par rapport à l'autre au moyen des galets (5).

12. Dispositif (1) de guidage de câbles selon la revendication 11, dans lequel au moins une des plaquettes latérales (3) des maillons (2) est conçue selon l'une des revendications 1 à 9.
